# EUROPÄISCHE PATENTSCHRIFT

(11) **EP 3 378 739 B1**
(45) Veröffentlichungstag und Bekanntmachung des Hinweises auf die Patenterteilung: **04.09.2019**
(21) Anmeldenummer: 18162784.5
(22) Anmeldetag: 20.03.2018
(51) Int. Cl.: B62D 21/02, B62D 21/16, B62D 29/00

(54) **STRUKTURBAUTEIL EINES FAHRZEUGRAHMENS MIT EINEM INTEGRIERTEN SPEICHERBEHÄLTER**
STRUCTURAL COMPONENT OF AN AUTOMOBILE FRAME WITH AN INTEGRATED STORAGE CONTAINER
COMPOSANT D'UN CADRE DE VÉHICULE DOTÉ D'UN RÉSERVOIR DE STOCKAGE INTÉGRÉ

(30) Priorität: 21.03.2017 DE 102017106024
(43) Veröffentlichungstag der Anmeldung: 26.09.2018
(73) Patentinhaber: Volkswagen AG, 38440 Wolfsburg (DE)
(72) Erfinder: Osterwald, Evelyn, 38173 Veltheim (DE); Berg, Hannes Christoph, 16355 Spanga (SE); Herrmann, Joachim, 38239 Salzgitter (DE); Krawczak, Ewelina Laura, 15161 Södertälje (SE)
(74) Vertreter: Gulde & Partner

(56) Entgegenhaltungen:
- DE-A1- 10 216 274
- DE-A1-102015 015 280
- DE-A1-102015 205 226

## Beschreibung

Die Erfindung betrifft ein Strukturbauteil für einen Fahrgestellrahmen eines Fahrzeuges, welches zur Befestigung des Strukturbauteiles an dem Fahrgestellrahmen mindestens ein Flanschende umfasst, das mit einem Speicherbehälter in Verbindung steht, wobei das mindestens eine Flanschende eine Flanschaufnahme aufweist, die den Speicherbehälter endseitig lose aufnimmt.

Ein Fahrgestellrahmen eines Fahrzeuges, insbesondere eines Lastfahrzeuges, umfasst typischerweise zwei mit mehreren Querträgern verbundene Längsträger, die in konventioneller Bauweise aus Stahlbauteilen, insbesondere aus Stahlprofilen, gefertigt sind. Die zuvor genannten Querträger werden hoch belastet und haben mit ihrer Steifigkeit maßgeblichen Einfluss auf das Fahrverhalten und den Komfort der Fahrzeuge. Um das Gewicht und in weiterer Folge den Treibstoffverbrauch und CO₂-Ausstoß zu verringern, ist aus dem ONLINE-Kunststoff-Magazin eine Veröffentlichung vom 03.11.2015 mit dem Titel "Hochleistungswerkstoff im Auto - Funktionsintegration Querträger ist auch Hochdrucktank" bekannt, die einen Querträger in Composite-Metall-Hybridbauweise beschreibt, in dem ein Hochdrucktank integriert ist.

Aus der Druckschrift DE 20 2013 004 660 U1 ist ein Fahrzeuganhänger mit einem Rahmengestell beschrieben, das wenigstens ein hohles Rahmengestellteil umfasst, dessen Innenhohlraum als Druckluftspeicher druckdicht ausgebildet ist.

Aus der Druckschrift DE 20 2012 102 721 U1 ist zudem ein Druckluftbehälter zum Einsatz in Fahrzeugen, insbesondere in Nutzfahrzeugen, bekannt, der als Hohlprofil ausgebildet ist und ein Strukturbauteil des Fahrzeuges bildet oder das Strukturbauteil zumindest teilweise ersetzt.

Ein Fertigungsverfahren zur Herstellung eines Druckgastankes geht aus der Druckschrift DE 10 2011 116 656 B3 hervor, wobei der Druckgastank einen Befüll- und Entnahmestutzen aufweist und eine Wandung des Druckgastanks aus einer Kohlefaserverbundwerkstoffschicht besteht und frei von einer innenwandigen Linerschicht ist. In dem Inneren des Druckgastanks ist eine Stützstruktur aus Streben oder Speichen aus Kohlefasermaterial angeordnet, wobei die distalen Streben- oder Speichen-Enden in einer polymeren Matrix in der die Wandung des Druckgastanks bildenden Kohlefaserverbundwerkstoffschicht aufgenommen sind.

Die Druckschrift DE 10 2015 015 280 A1 offenbart einen Querträger für einen Fahrzeugrahmen, der einen hohlen Rohrabschnitt und Endteile umfasst, die an entgegengesetzten Enden des Rohrabschnitts befestigt sind, wobei die Endteile zum Befestigen an Rahmenschienen des Fahrzeugrahmens angepasst sind, wobei vorgesehen ist, dass der Rohrabschnitt an dem jeweiligen Endteil durch eine Klebeverbindung befestigt ist.

Schließlich beschreibt die Druckschrift DE 10 2015 205 226 A1 ein Strukturbauteil für eine Crashstruktur eines Kraftfahrzeugs, wobei ein Stoßfängerquerträger des Kraftfahrzeugs über das Strukturbauteil mit einer Karosserie des Kraftfahrzeugs verbindbar ist, wobei das Strukturbauteil aus einem Faserverbundwerkstoff hergestellt ist und wenigstens einen als zumindest einseitig offener Hohlkörper ausgebildeten Deformationsabschnitt aufweist, wobei eine Innenmantelfläche und eine Außenmantelfläche des Deformationsabschnitts jeweils zumindest teilweise mit einer Entformungsschräge versehen sind.

Als weitere Druckschriften, die zum technologischen Hintergrund des Gegenstandes der Erfindung gehören, werden die Druckschriften DE 20 2014 002 557 U1 und DE 10 2013 012 287 A1 sowie DE 102 16 274 A1 genannt.

Der Erfindung liegt von dem Stand der Technik ausgehend die Aufgabe zugrunde, ein Strukturbauteil eines Fahrgestellrahmens eines Fahrzeuges mit einem integrierten Tank zu schaffen, welches bei einem geringen Gewicht eine hohe Steifigkeit aufweist.

Ausgangspunkt der Erfindung ist ein Strukturbauteil für einen Fahrgestellrahmen eines Fahrzeuges, welches zur Befestigung des Strukturbauteiles an dem Fahrgestellrahmen mindestens ein Flanschende umfasst, das mit einem Speicherbehälter in Verbindung steht, wobei das mindestens eine Flanschende eine Flanschaufnahme aufweist, die den Speicherbehälter endseitig aufnimmt.

Erfindungsgemäß ist vorgesehen, dass eine indirekte feste Verbindung zwischen Speicherbehälter (Liner) und Flanschaufnahme durch ein als Faserverbundlaminat ausgeführtes Verbindungselement bewirkt ist, welches zumindest teilweise eine Mantelfläche der Flanschaufnahme und zumindest teilweise eine Mantelfläche des Speicherbehälters einstückig umgibt.

Speicherbehälter und Verbindungselement bilden nach der Fertigstellung des Querträgers einen Drucktank. In bevorzugter Ausgestaltung der Erfindung ist der Speicherbehälter ein Liner, der einen Hüllkern des Drucktankes mit einer innerhalb der Hülle gebildeten Kavität bildet. Der Speicherbehälter wird nachfolgend als Liner bezeichnet.

In vorteilhafter Weise bilden der Liner und das Flanschende eine Einheit, die mittels des Verbindungselementes indirekt fest verbunden sind. Durch das mehrschichtig ausgeführte Faserverbundlaminat werden der Liner und das Flanschende in vorteilhafter Weise indirekt miteinander verbunden, ohne dass die üblichen Verbindungstechniken zum Einsatz kommen. In der Beschreibung ist detailliert erläutert, wie die indirekte Verbindung zwischen dem Liner und dem Flanschende ausgeführt ist und hergestellt wird. Durch die Integration des Drucktankes im Strukturbauteil, insbesondere in einem Querträger, wird in einem Fahrzeug in vorteilhafter Weise Bauraum gewonnen, da der zuvor außerhalb des Strukturbauteiles angeordnete Drucktank jetzt innerhalb des Strukturbauteiles angeordnet ist.

Darüber hinaus wird in vorteilhafter Weise dafür gesorgt, dass das Strukturbauteil den Stabilitätsanforderungen und Festigkeitsanforderungen innerhalb eines Fahrgestellrahmens genügt und gleichzeitig ein geringes Gewicht aufweist.

In bevorzugter Ausgestaltung der Erfindung ist vorgesehen, dass das Flanschende des Strukturbauteiles aus einem oder mehreren Leichtbaumaterial/ien gefertigt ist.

Vorgesehen ist außerdem bevorzugt, dass der Liner beispielsweise aus einem thermoplastischen Kunststoffmaterial, insbesondere aus Polyethylen oder Polyamid oder Polyoxymethylen, gefertigt ist.

Der Liner stellt dabei eine Dichtschicht dar, während die Drucklasten bei einer Druckbefüllung des Liners und die Masselasten bei Befüllung des Liners mit einem Medium hoher Dichte von der als Verbindungselement vorgesehenen, den Liner umgebenden Wandung übernommen werden.

Der Liner dient während der Herstellung des Querträgers ferner in vorteilhafter Weise des Bauteils als Hüllkern, um den die genannte Wandung, insbesondere durch Wickeln, aufgebaut wird, wie noch erläutert wird.

Durch die Herstellung des Liners aus einem thermoplastischen Kunststoffmaterial und/oder durch die Herstellung des Flanschendes aus mindestens einem Leichtbaumaterial, insbesondere aus Aluminium, wird bereits dafür gesorgt, dass das Strukturbauteil ein geringes Gewicht aufweist.

Hinzu kommt erfindungsgemäß, dass das Verbindungselement, welches die beiden Bauteile, den Liner und das Flanschende, indirekt miteinander verbindet, ebenfalls aus einem leichten Werkstoff, insbesondere aus dem Faserverbundlaminat, ausgebildet ist, so dass das Strukturbauteil aus drei Bauteilen besteht, die in der vorteilhaftesten Ausgestaltung alle aus einem leichten Werkstoff ausgebildet sind, wodurch sich ein Strukturbauteil mit einem sehr geringen Gewicht ergibt.

Vorgesehen ist bevorzugt, dass die Flanschaufnahme des Flanschendes schalenartig ausgebildet ist, wobei eine Außenkontur einer Kappe des Liners mit einer Innenkontur der schalenartigen Flanschaufnahme korrespondiert. Durch diese Lösung wird in vorteilhafter Weise dafür gesorgt, dass der Liner unabhängig von der indirekten Verbindung mit dem Flanschende durch den erzielten Formschluss gegenüber dem Flanschende in eine gewünschte Position kommt, bevor die indirekte Verbindung zwischen Flanschende und Liner hergestellt wird.

Der Liner weist seinerseits eine Kappe auf, die es ermöglicht, dass der Liner formschlüssig in die schalenartige Flanschaufnahme des Flanschendes gesteckt werden kann, wobei die Flanschaufnahme an ihrem dem Flanschende gegenüberliegenden Ende einen Flanschrand bildet. Der Flanschrand bildet den Übergang der Flanschaufnahme zu dem Liner, wie in der Beschreibung näher erläutert ist.

Vorgesehen ist ferner bevorzugt, dass das Flanschende auf seiner zu dem Liner gerichteten Innenseite eine kreisförmig umlaufende Flanschnut aufweist, wobei in der Flanschnut eine Gleitbuchse und eine Dichtung angeordnet sind. Dadurch ist in vorteilhafter Weise sichergestellt, dass eine passgenaue Aufnahme und Lagerung des Liners in dem Flanschende möglich ist, wobei gleichzeitig dafür gesorgt ist, dass der Liner gegenüber dem Flanschende abgedichtet ist.

Das Strukturbauteil ist bevorzugt dadurch gekennzeichnet, dass ein Hals des Liners einerseits über die Gleitbuchse formschlüssig in die Flanschnut des Flanschendes eingesteckt ist, wobei die Dichtung für eine Abdichtung gegenüber dem Flanschende sorgt. Um einen Übergang zwischen dem Ende des Liners und dem Flanschende zu gewährleisten, weist der Liner in vorteilhafter Weise den Hals auf.

Das Verbindungselement ist, wie bereits erläutert, als Faserverbundlaminat ausgebildet, wobei bevorzugt vorgesehen ist, dass das Faserverbundlaminat als ein Faserkunststoffverbund aus einer Kunststoffmatrix als Bettungsmasse und in der Bettungsmasse einliegenden Verstärkungsfasern, insbesondere Kohlenstofffasern, gefertigt ist, wobei die Kohlenstofffasern durch zumindest teilweises Umwickeln der Flanschaufnahme und zumindest teilweises Umwickeln des Liners das Verbindungselement bilden, welches die indirekte Verbindung zwischen der Flanschaufnahme des Flanschendes und dem Liner herstellt.

Durch diese Vorgehensweise ist es einfach möglich, die Flanschaufnahme des Flanschendes und den Liner über das oberhalb der Mantelfläche der Flanschaufnahme und über das oberhalb der Mantelfläche des Liners angeordnete Faserverbundlaminat indirekt miteinander zu verbinden, wobei die äußere Form der Flanschaufnahme und des Liners sehr variabel ausgestaltet werden können.

Das zumindest teilweise Umwickeln der Mantelfläche der Flanschaufnahme und das zumindest teilweise Umwickeln der Mantelfläche des Liners ist eine Technik, die hinsichtlich der Formgebung des als Verbindungselement ausgebildeten Faserverbundlaminats nicht auf kreiszylindrische Geometrien beschränkt ist.

Mit anderen Worten, die erfindungsgemäße Verbindungstechnik mittels des Faserverbundlaminates stellt zwischen der Flanschaufnahme und dem Liner eine indirekte Verbindung her, bei der die Bauteile zueinander lagefest angeordnet sind, ohne dass die Flanschaufnahme und der Liner direkt miteinander verbunden sind. Insofern wird durch das Faserverbundlaminat eine indirekte Verbindung zwischen der Flanschaufnahme und dem Liner hergestellt. Dadurch wird der Effekt erzielt, dass sich der Liner im Rahmen des zur Verfügung stehenden Zwischenraumes zwischen der Innenfläche des Faserverbundlaminates und der Außenfläche des Liners bei einer Materialabkühlung zusammenziehen und bei einer Materialerwärmung ausdehnen kann.

In bevorzugter Ausgestaltung der Erfindung weist der Liner mindestens einseitig eine Lineröffnung und das Flanschende mindestens eine mit der Lineröffnung in Verbindung stehende Flanschöffnung auf. Durch die mindestens eine Lineröffnung und die mindestens eine Flanschöffnung ist die Zuführung und Entnahme des in dem Liner bevorrateten Mediums möglich. Bei dem Medium handelt es sich beispielsweise um unter Druck stehende Luft, wobei auch andere gasförmige oder flüssige Medien in dem Liner bevorratet werden können.

Wird das Strukturbauteil als Querträger in dem Fahrgestellrahmen eingesetzt, ist vorgesehen, dass das Strukturbauteil zwei Flanschenden mit jeweils einer Flanschaufnahme aufweist, die den Liner beidseitig lose aufnehmen, wobei die indirekte feste Verbindung zwischen dem Liner und den Flanschaufnahmen durch das als Faserverbundlaminat ausgeführte Verbindungselement bewirkt ist, welches zumindest teilweise die Mantelflächen der Flanschaufnahmen und zumindest teilweise die Mantelfläche des Liners einstückig umgibt, wobei im Einbauzustand, bei dem der Querträger zwischen zwei Längsträgern des Fahrgestellrahmens angeordnet ist, auf die Flanschenden wirkende Kräfte in vorteilhafter Weise über das Verbindungselement übertragbar sind.

Ein Querträger als bevorzugte Ausgestaltung der Erfindung wird erfindungsgemäß in einem Verfahren hergestellt, welches folgende Schritte umfasst:
a) Fertigen von zwei Flanschenden mit je einer Flanschaufnahme,
b) Fertigen eines Liners,
c) Einstecken des Liners in die Flanschaufnahmen, so dass die Flanschaufnahmen den Liner im Zusammenbauzustand beidseitig endseitig lose aufnehmen.

Erfindungsgemäß ist vorgesehen, dass in einem Schritt d) eine Mantelfläche der Flanschaufnahmen zumindest teilweise und eine Mantelfläche des Liners zumindest teilweise mit einem Verbindungselement aus einem Faserverbundlaminat umgeben wird, wodurch die Flanschaufnahmen und der Liner nach Fertigstellung des Verbindungselementes indirekt fest verbunden sind.

Prinzipiell ist ein Strukturbauteil mit nur einem Flanschende mit folgenden Schritten herstellbar:
a) Fertigen eines Flanschendes mit einer Flanschaufnahme,
b) Fertigen eines Liners,
c) Einstecken des Liners in die Flanschaufnahme, so dass die Flanschaufnahme den Liner im Zusammenbauzustand endseitig lose aufnimmt.

Erfindungsgemäß ist dann vorgesehen, dass in einem Schritt d) die Mantelfläche einer Flanschaufnahme zumindest teilweise und die Mantelfläche des Liners zumindest teilweise mit einem Verbindungselement aus einem Faserverbundlaminat umgeben wird, wodurch die Flanschaufnahme und der Liner nach Fertigstellung des Verbindungselementes indirekt fest verbunden sind.

Die Erfindung wird nachfolgend anhand der zugehörigen Zeichnungen erläutert. Es zeigen:
- Figur 1A: einen Fahrgestellrahmen eines Nutzfahrzeuges in einer perspektivischen Darstellung mit einem als Einzelheit I herausgezogenen Querträger als Strukturbauteil des Fahrgestellrahmens nach dem Stand der Technik;
- Figur 1B: den Querträger gemäß Figur 1A in einer perspektivischen Darstellung gemäß der in Figur 1A dargestellten Einzelheit I;
- Figur 2A: einen mit einem integrierten Liner versehenen erfindungsgemäßen Querträger in einer ersten Ausführungsform in einer perspektivischen Darstellung in Längsträgern eines Fahrgestellrahmens;
- Figur 2B: den mit dem integrierten Liner versehenen Querträger gemäß der Figur 2A in einer anderen perspektivischen Darstellung in einer Einzeldarstellung;
- Figur 3: eine Schnittdarstellung in einer perspektivischen Ansicht durch den Querträger gemäß Figur 2B;
- Figur 4: eine Einzelheit II des Querträgers gemäß Figur 3 in einer Schnittdarstellung;
- Figur 5: eine Schnittdarstellung eines erfindungsgemäßen Querträgers in einer zweiten Ausführungsform;
- Figur 6: eine Schnittdarstellung eines erfindungsgemäßen Querträgers in einer dritten Ausführungsform;
- Figur 7: eine Schnittdarstellung eines erfindungsgemäßen Querträgers in einer vierten Ausführungsform;
- Figur 8: eine Schnittdarstellung eines erfindungsgemäßen Querträgers in einer fünften Ausführungsform.

Für die Zwecke der Beschreibung soll die in Längsrichtung eines Fahrzeuges liegende Richtung mit "x" bezeichnet werden. Mit "y" wird die Richtung in der Horizontalen des Fahrzeuges quer zur x-Richtung bezeichnet, und mit "z" wird die Richtung in der Vertikalen des Fahrzeuges quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

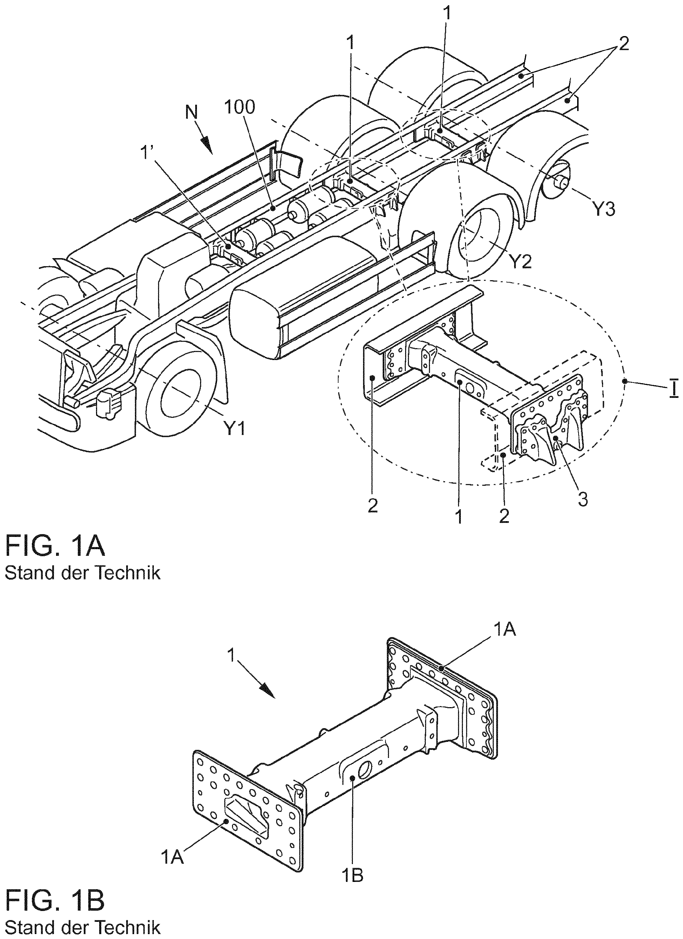

Die Figur 1A zeigt einen Fahrgestellrahmen 100 eines nicht näher dargestellten Fahrzeuges, insbesondere Nutzfahrzeuges N, in einer perspektivischen Darstellung mit einem als Einzelheit I herausgezogenen Querträger 1 als Strukturbauteil des Fahrgestellrahmens 100 nach dem Stand der Technik.

Das Nutzfahrzeug N umfasst mehrere Radachsen Y1, Y2, Y3, die quer zu den Längsträgern 2 des Fahrgestellrahmens 100 angeordnet sind.

Der Fahrgestellrahmen 100 weist mehrere Querträger 1', 1 auf, wobei mindestens ein Querträger 1 gemäß der Figur 1A parallel zu einer Radachse Y2, Y3 des Nutzfahrzeuges N zumindest nahe einer Achsaufhängung 3 (vergleiche Einzelheit I) angeordnet ist.

Der in Figur 1A als Einzelheit I herausgezogene Querträger 1 weist eine Längsachse auf, in dessen Verlängerung unmittelbar die Achsaufhängung 3 ausgebildet ist.

Der mit 1' bezeichnete Querträger liegt im Unterschied zu den Querträgern 1 von den Radachsen Y1, Y2 entfernt und weist somit in seiner Verlängerung keine Achsaufhängung auf.

Die zwischen den Längsträgern angeordneten Querträger 1, 1' werden auf Zug, Druck, Biegung und Torsion beansprucht, wobei die nahe einer Achsaufhängung 3 und/oder die unmittelbar in Verlängerung der Achsaufhängung 3 angeordneten Querträger 1 größere Zugkräfte, Drucckräfte, Biegungskräfte und Torsionskräfte aufnehmen müssen als ein Querträger 1', der fern einer Achsaufhängung 3 angeordnet ist.

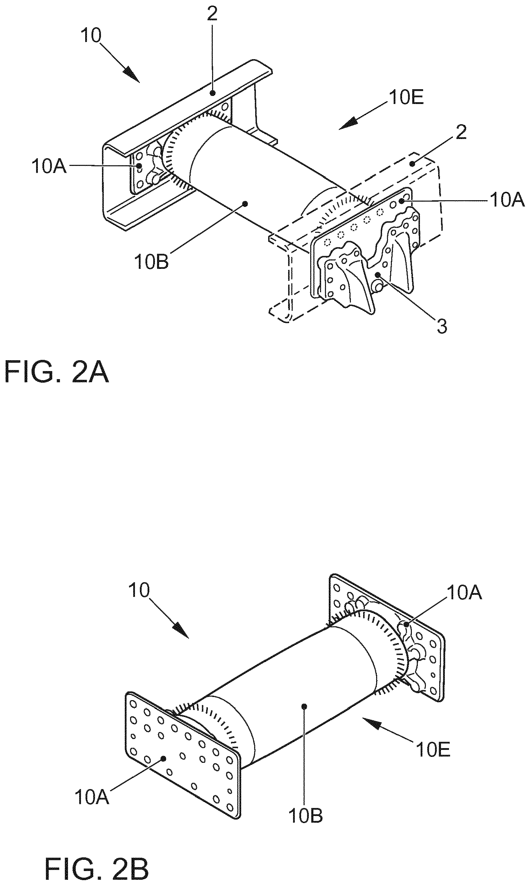

Ein erfindungsgemäß mit dem Bezugszeichen 10 versehener Querträger (vergleiche die nachfolgenden Figuren 2A bis 8) ist sowohl nahe einer Achsaufhängung 3 und/oder unmittelbar in Verlängerung der Achsaufhängung 3 gemäß dem herkömmlichen Querträger 1 und/oder fern einer Achsaufhängung 3 gemäß dem herkömmlichen Querträger 1' anordbar.

Wie in den Figuren 1A und 1B gezeigt, sind die einteiligen Querträger 1 aus Gusseisen, während die einteiligen Querträger 1' als Stahlkonstruktion ausgeführt sind. Sie weisen Flansche beziehungsweise so genannte Flanschenden 1A auf.

Die Flanschenden 1A dienen einerseits der Befestigung des zwischen den Flanschenden 1A als Hohlprofil 1B ausgebildeten Querträgers 1, 1' an den jeweils zumeist als U-Profil ausgebildeten Längsträgern 2 und andererseits in dem in Figur 1A in der Einzelheit I gezeigten Ausführungsbeispiel, bei dem der Querträger 1 unmittelbar in Verlängerung der Achsaufhängung 3 angeordnet ist. Die Achsaufhängung 3 wird mit denselben Schrauben wie der Querträger 1, 1' an den Längsträgern 2 befestigt. Die Schrauben werden durch die Achsaufhängung 3, den Längsträger 2 und das Flanschende 1A gesteckt und auf der Innenseite der Flanschplatten der Flanschenden 1A in Mutterplatten eingeschraubt.

Der nachfolgend anhand der Figuren 2A bis 8 erläuterte erfindungsgemäße Querträger 10 stellt ein Strukturbauteil eines Fahrgestellrahmens 100 eines Fahrzeuges dar, der in vorteilhafter Weise mit einem integrierten Tank versehen ist, wobei der Querträger 10 in vorteilhafter Weise ein geringes Gewicht und eine hohe Steifigkeit aufweist.

Der erfindungsgemäße Querträger 10 ist ausgelegt, um die nahe einer Achsaufhängung 3 und/oder unmittelbar in Verlängerung der Achsaufhängung 3 und/oder die fern einer Achsaufhängung 3 über die Längsträger 2 in den Querträger 10 eingeleiteten maximal auftretenden Zugkräfte, Druckkräfte, Biegungskräfte und Torsionskräfte aufzunehmen.

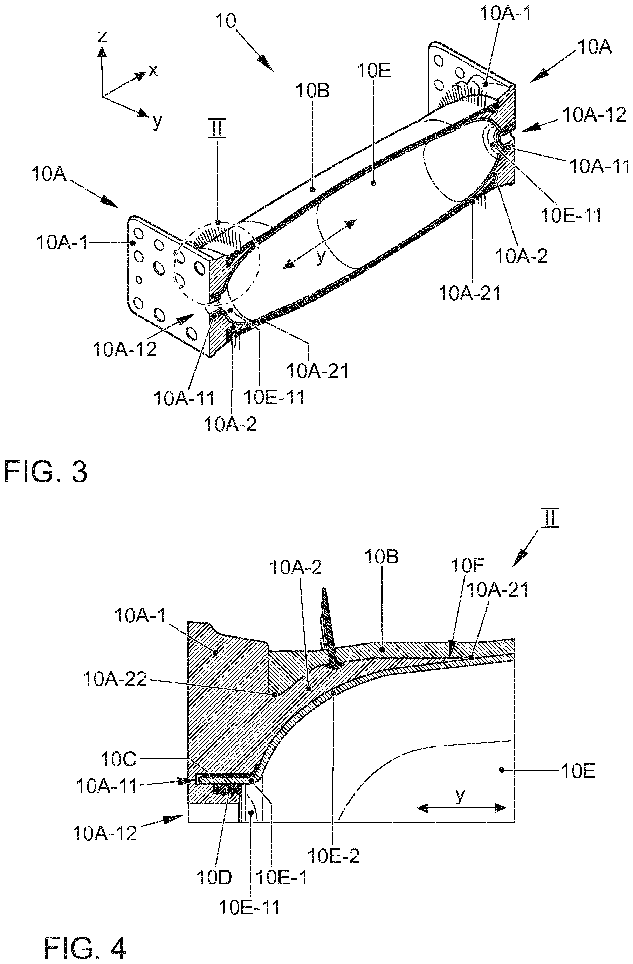

Die Figur 2A zeigt einen mit einem integrierten Liner 10E (vergleiche vorab Figur 3) versehenen Querträger 10 in einer perspektivischen Darstellung, der im dargestellten Ausführungsbeispiel unmittelbar in Verlängerung der Achsaufhängung 3 zwischen den Längsträgern 2 eines Fahrgestellrahmens 100 angeordnet ist.

Der Liner 10E und das Verbindungselement 10B in Kombination bilden im fertigen Herstellungszustand einen Drucktank, in dem gespeichertes Medium zumeist unter einem vorgebbaren von dem Umgebungsdruck abweichenden Druck steht. Dabei kommt dem Liner 10E die Funktion einer Dichtschicht zu, während das als Faserverbundlaminat ausgebildete Verbindungselement 10B den Druck des Mediums aufnimmt, so dass die den Druck aufnehmende Funktion im Wesentlichen durch das Verbindungselement 10B bewirkt wird.

Der mit dem integrierten Drucktank versehene Querträger 10 gemäß der Figur 2A ist in Figur 2B in einer perspektivischen Darstellung in einer Einzeldarstellung gezeigt.

Die Flanschenden 10A unterscheiden sich erfindungsgemäß von den Flanschenden 1A der herkömmlichen Querträger 1, 1' nach dem Stand der Technik gemäß den Figuren 1A und 1B, wie nachfolgend noch erläutert wird.

Zur Reduzierung des Gewichts wird der Querträger 10 mehrteilig ausgebildet und in einem erfindungsgemäßen Herstellungsverfahren, welches nachfolgend noch erläutert wird, werden die einzelnen vorgefertigten Komponenten miteinander verbunden beziehungsweise innerhalb des Herstellungsverfahrens erzeugt und zu einem Zusammenbauteil in einer Leichtbauweise hergestellt.

Mit anderen Worten, der erfindungsgemäße Querträger 10 umfasst die vorgefertigten Komponenten 10A, 10C, 10D, 10E und mindestens eine Komponente 10B, die erst in einem der vorgesehenen Herstellungsschritte des zugehörigen Herstellungsverfahrens des Querträgers 10 gebildet wird.

Die Figur 3 zeigt eine Schnittdarstellung in einer perspektivischen Ansicht durch den Querträger 10 gemäß Figur 2B und die Figur 4 zeigt eine Einzelheit II des Querträgers gemäß Figur 3 in einer vergrößerten Schnittdarstellung. Die Figuren 3 und 4 werden nachfolgend auf die Komponenten des Querträgers 10 eingehend in einer Zusammenschau erläutert.

Die Flanschenden 10A beziehungsweise die Flansche werden aus Stahl oder einem Stahlgussmaterial oder bevorzugt aus einem Leichtbaumaterial, insbesondere einem Aluminiummaterial oder einem Kunststoffmaterial, vorgefertigt.

Die Flanschenden 10A sind einteilig bevorzugt aus Aluminium hergestellt und entweder gegossen oder aus einem Vollmaterial ausgefräst.

Aufgrund der hohen Anzugsmomente werden die Flanschplatten 10A-1 der Flanschenden 10A mit Öffnungen versehen, um die Flanschenden 10A über eine Durchsteckverschraubung mit den Längsträgern 2 verbinden zu können. Dort, wo bauraumbedingt keine Durchsteckverschraubungen realisiert werden können, werden Gewindebuchsen in Sacklöcher eingeschraubt, um die Schrauben und auftretenden Anzugsmomente aufnehmen zu können.

Die Flanschenden 10A umfassen auf ihrer zu dem Liner 10E gerichteten Innenseite eine kreisförmig umlaufende Flanschnut 10A-11. In der Flanschnut 10A-11 sind im Zusammenbauzustand jeweils eine vorgefertigte Gleitbuchse 10C und eine vorgefertigte Dichtung 10D angeordnet.

Die Flanschenden 10A beziehungsweise im Ausführungsbeispiel deren Flanschplatten 10A-1 gehen jeweils von der Innenseite der Flanschenden 10A ausgehend in die in Längsrichtung y (y-Richtung) weisenden Flanschaufnahmen 10A-2 über, die sich schalenartig gegenüberliegen, wobei die Flanschaufnahmen 10A-2 jeweils einerseits an den Flanschplatten (10A-1) enden und in die Flanschnuten 10A-11 übergehen und andererseits jeweils einen Flanschrand 10A-21 bilden.

Eine weitere vorgefertigte Komponente ist als ein Liner 10E ausgebildet. Der Liner 10E umfasst auf beiden Seiten einen Hals 10E-1 und eine Kappe 10E-2, wobei der Durchmesser und die Wandstärke des Halses 10E-1 mit dem Durchmesser und der Nutbreite der Flanschnuten 10A-11 korrespondiert. Die Außenkontur der jeweiligen Kappe 10E-2 korrespondiert mit der Innenkontur der jeweiligen schalenartigen Flanschaufnahme 10A-2.

Durch diese vorbeschriebene Ausgestaltung kann der jeweilige Hals 10E-1 und die jeweilige Kappe 10E-2 des vorgefertigten Liners 10E formschlüssig in die Flanschnuten 10A-11 und die schalenartige Flanschaufnahme 10A-2 formschlüssig eingesetzt, insbesondere gesteckt werden, wobei die Dichtungen 10D für eine Abdichtung gegenüber den Flanschenden 10A sorgen.

Der Querträger 10 bildet in diesem Zusammenbauzustand ein aus zwei Bauteilen formschlüssig zusammengefügtes Zusammenbauteil aus den vorgefertigten Flanschen 10A und dem Liner 10E.

In bevorzugter Ausgestaltung ist der Speicherbehälter 10E ein so genannter Liner aus Kunststoff (auch Kunststoffblase genannt), wobei insbesondere ein thermoplastischer Kunststoff mit hoher Dichtigkeit, insbesondere HDPE (HDPE steht für Polyethylen hoher Dichte, englisch: High Density Polyethylen), vorgeschlagen wird, so dass der vorgefertigte Liner 10E kostengünstig in einem Blasformverfahren hergestellt werden kann, wobei bei der Herstellung dafür gesorgt ist, dass der Liner 10E gegenüber gasförmigen und/oder flüssigen Medien eine gewünschte Dichtigkeit aufweist.

In einer alternativen Ausgestaltung wird der Liner 10E aus einem anderen thermoplastischen Kunststoff, wie beispielsweise Polyamid (Abkürzung: PA) oder Polyoxymethylen (Abkürzung: POM), hergestellt.

Prinzipiell besteht auch die Möglichkeit, dass der Liner 10E aus einem Metall vorgefertigt wird.

Die Materialauswahl erfolgt in Abhängigkeit der gewünschten Stabilität des Liners, dem Gewicht und/oder der Dichtigkeit gegenüber dem im Liner 10E bevorrateten Medium in Abhängigkeit der physikalischen und chemischen Eigenschaften des Mediums im Liner 10E.

Die zu dem Zusammenbauteil zusammengefügten Bauteile, die vorgefertigten Flanschenden 10A und der Liner 10E, werden in einem weiteren Herstellungsschritt durch Laminieren miteinander verbunden.

Vorgeschlagen wird die Ausbildung eines Verbindungselementes 10B, welches indirekt eine feste Verbindung zwischen den zuvor formschlüssig zusammengefügten Flanschenden 10A und dem Liner 10E erzeugt, wobei in einer Herstellungsart vorgesehen ist, das Verbindungselement 10B als gewickeltes Faserverbundlaminat herzustellen.

Dabei wird wie folgt vorgegangen: Das den Liner 10E schützende und die Kraft zwischen den Flanschenden 10A kraftübertragende Verbindungselement 10B wird als Faserverbundlaminat (hier CFK) im Nasswickelverfahren aufgebracht. Dem Verbindungselement 10B kommt somit in vorteilhafter Weise eine Mehrfachfunktion zu. Eine Funktion besteht in dem Schutz des Liners 10E. Eine weitere Funktion besteht in der Aufnahme der Kräfte, die vom Druck des im Liner 10E gespeicherten Mediums herrühren. Zudem übernimmt das Verbindungselement 10B als weitere Funktion die im Betriebsfall notwendige Kraftübertragung zwischen den Flanschenden 10A, da die zuvor nur gefügten vorgefertigten Komponenten 10A und 10E nach Fertigstellung mittels des Verbindungselementes 10B indirekt fest miteinander verbunden sind.

Das Verbindungselement 10B wird auf die Flanschaufnahmen 10A-2 der Flanschenden 10A und den Liner 10E durch das Nasswickelverfahren aufgebracht.

Das Verbindungselement 10B umgibt nach der Fertigstellung mit seiner Innenfläche eine Außenfläche der Flanschaufnahme 10A-2 der Flanschenden 10A und eine Außenfläche des Liners 10E. Mit anderen Worten, der Liner 10E ist in vorteilhafter Weise indirekt über das Verbindungselement 10B mit der Flanschaufnahme 10A-2 der Flanschenden 10A ortsfest verbunden. Die Materialien des Liners 10E und der Flanschaufnahme 10A-2 der Flanschenden 10A sind somit physikalisch nicht miteinander verbunden, wodurch der Effekt erzielt wird, dass sich der Liner 10E temperaturabhängig bei einer Materialausdehnung im Sinne der sich verändernden Abmessungen der Flanschaufnahme 10A-2 der Flanschenden 10A bewegen kann. Die einen anderen Ausdehnungskoeffizienten aufweisende Flanschaufnahme 10A-2 eines Flanschendes 10A ist dadurch hinsichtlich der temperaturabhängig stattfindenden Materialausdehnung im Sinne der sich verändernden Abmessungen in vorteilhafter Weise von dem Liner 10E entkoppelt.

In einer optionalen Ausgestaltung kann auf die Flansche 10A ein Kleber aufgebracht werden, so dass die Innenfläche des Verbindungselementes 10B und die Außenfläche der Flanschaufnahme 10A-2 der Flanschenden 10A zusätzlich miteinander verklebt sind.

In einer Ausgestaltung zur Herstellung des Verbindungselementes 10B im Nasswickelverfahren werden Wickelkämme 20 eingesetzt, die bei der Vorfertigung der Flanschenden 10A berücksichtigt und die in den Flanschaufnahmen 10A-2 der Flanschenden 10A befestigt, insbesondere eingeklebt werden.

Die Wickelkämme 20 werden ringförmig auf einem vorgebbaren Außenumfang der sich gegenüberliegenden Flanschaufnahmen 10A-2 angeordnet, wobei die Zähne im Wesentlichen orthogonal von den Flanschaufnahmen 10A-2 abstehen.

Um einen Übergang zwischen den Rändern 10A-21 der Flanschaufnahmen 10A-2 und dem Liner 10E zu gewährleisten und damit die bei dem Nasswickelverfahren zwischen den Flanschenden 10A um die Zähne der Wickelkämme 20 geführten Verstärkungsfasern, insbesondere Kohlenstofffasern, möglichst ohne Knicke abgelegt werden können, werden - wie in der Figur 4 sichtbar gemacht ist - umfangsseitig umlaufende Keilringe 10F stirnseitig an die Ränder 10A-21 der Flanschaufnahmen 10A-2 der Flanschenden 10A auf den Liner 10E gelegt.

Nach Fertigstellung, das heißt nach dem Wickeln und Aushärten des Verbindungselementes 10B, werden die Zähne der Wickelkämme 20 abgebrochen oder abgetrennt, so dass nur die Wickelkammrücken und der von den Verstärkungsfasern, insbesondere Kohlenstofffasern, eingewickelte Bereich der Zähne in dem Verbindungselement 10B verbleiben.

Zudem werden im Übergang zwischen den Flanschplatten 10A-1 und den Flanschaufnahmen 10A-2 auf den Außenseiten der Flanschaufnahmen 10A-2 Vertiefungen 10A-22 gebildet.

Der Vorteil ist, dass das Verbindungselement 10B durch die beidseitige Ablage der Schlaufen, der beim Wickeln um die Zähne der Wickelkämme 20 geführten Verstärkungsfasern, insbesondere Kohlenstofffasern, in der durch die Vertiefung 10A-22 gebildeten Hinterschneidung, eine ortsfeste und sichere Befestigung des Verbindungselementes 10B auf den konisch auslaufenden Konturen der Flanschaufnahmen 10A-2 der Flanschenden 10A bewirkt.

Alternativ kann als Herstellungsart statt des Nasswickelverfahrens das als RTM-Verfahren (Abkürzung englisch: Resin Transfer Molding) bezeichnete Harzinjektionsverfahren zum Einsatz kommen, wobei der Vorteil darin besteht, dass querträgerseitig der jeweilige Wickelkamm 20 beziehungsweise die nach Fertigstellung in dem Querträger 10 verbleibenden Reste der Wickelkämme 20 gegebenenfalls entfallen können. Bei dem RTM-Verfahren werden die Verstärkungsfasern, insbesondere Kohlenstofffasern, aufgebracht und im Gegensatz zum Nasswickeln erst im Nachhinein imprägniert. Im RTM-Verfahren wird ein Faserkunststoffverbund aus einer Kunststoffmatrix als Bettungsmasse aus einem duroplastischen Kunststoff, wie beispielsweise Polyester, Epoxid- oder Phenolharz, verwendet, in der wiederum Verstärkungsfasern einliegen.

Wie bereits erläutert wurde zuvor der Liner 10E in die Flanschenden 10A eingesetzt, wobei zum Abdichten des Liners 10E gegenüber den Flanschenden 10A die Dichtungen 10D eingesetzt sind. Zur Aufnahme unterschiedlicher Wärmedehnungen ist der Liner 10E über die Gleitbuchsen 10C vorzugsweise beidseitig in den Flanschenden 10A lose gelagert, wobei die indirekte ortsfeste Verbindung der Flanschenden 10A schließlich mittels des Verbindungselementes 10B erfolgt.

Eine nur einseitige Loslagerung des Liners 10E ist grundsätzlich ebenfalls möglich. Durch die Loslagerung auf einer oder beiden Seiten wird in vorteilhafter Weise erreicht, dass im Liner 10E keine überkritischen Spannungen entstehen, da die im Betrieb des Nutzfahrzeuges N auf die Flanschenden 10A des Querträgers 10 wirkenden Zugkräfte, Druckkräfte, Biegungskräfte und Torsionskräfte nicht auf den Liner 10E übertragen werden.

Vorgesehen ist, dass der Liner 10E mindestens einseitig offen ist. Dazu weist der Liner 10E prinzipiell mindestens eine Lineröffnung 10E-11 auf. Im Ausführungsbeispiel weist der Liner 10E mindestens einseitig den Hals 10E-1 mit einer Öffnung 10E-11 auf, der im Zusammenbauzustand in der Flanschnut 10A-11 eingesteckt ist, wobei die Flanschplatte 10A-1 eines Flanschendes 10A eine Flanschöffnung 10A-12 aufweist, die das Medium im Liner 10E über die Lineröffnung 10E-11 und über die Flanschöffnung 10A-12 in der Flanschplatte 10A-1 in mindestens eine Richtung passieren lässt.

Im dargestellten Ausführungsbeispiel ist der Liner 10E beidseitig offen, so dass die beschriebene Ausgestaltung beidseitig vorgesehen ist.

Im Ausführungsbeispiel ist der Liner 10E somit nach beiden Seiten in y-Richtung offen.

In den Flanschöffnungen 10A-12 befinden sich vorzugsweise Innengewinde. An einem der Innengewinde ist beispielsweise eine Luftzufuhr- und Luftabfuhrleitung einer einen geschlossenen Kreislauf aufweisenden Bremsanlage des Nutzfahrzeuges N angeschlossen, wobei vorgesehen ist, dass an dem Innengewinde der analog ausgebildeten gegenüberliegenden Flanschöffnung 10A-12 eine Entwässerungsleitung eines öffenbaren Entwässerungssystems angeschlossen ist. Es besteht auch die Möglichkeit, ein Medium an der einen Flanschöffnung 10A-12 zuzuführen und an der anderen Flanschöffnungen 10A-12 abzuführen.

Als eine derzeit bevorzugte Ausführungsvariante werden die Flanschenden 10A aus Aluminium vorgefertigt hergestellt. Der Liner 10E wird aus Polyethylen hoher Dichte vorgefertigt hergestellt. Die vorgefertigten Komponenten 10A, 10E werden in einem Herstellungsschritt zusammengefügt und durch das Verbindungselement 20, welches vorzugsweise in dem Nasswickelverfahren als Faserverbundschicht hergestellt wird, in einem weiteren Herstellungsschritt miteinander verbunden. Diese mögliche Kombination der beschriebenen Ausführungsmöglichkeiten löst die Aufgabe, dass der Querträger 10 als Strukturbauteil des Fahrgestellrahmens 100 des Nutzfahrzeuges N in vorteilhafter Weise einen integrierten Drucktank aufweist, wobei der Querträger 10 ein sehr geringes Gewicht und eine hohe Steifigkeit aufweist. Die Gewichtsersparnis beträgt je nach Ausgestaltung des erfindungsgemäßen Querträgers 10 gegenüber den herkömmlichen Querträgern 1, 1' gemäß den Figuren 1A und 1B bis zu 60 Prozent. Zudem besteht der Vorteil darin, dass in vorteilhafter Weise durch die Integration des Drucktanks bei gleichzeitiger Gewichtsersparnis zusätzlicher Bauraum gewonnen wird.

Ein besonders großes Volumen des Drucktanks wird dadurch erreicht, dass der Liner 10E gemäß den Figuren 3 und 4 keinen durchgehenden kreisförmigen zylindrischen Rohr-Querschnitt aufweist.

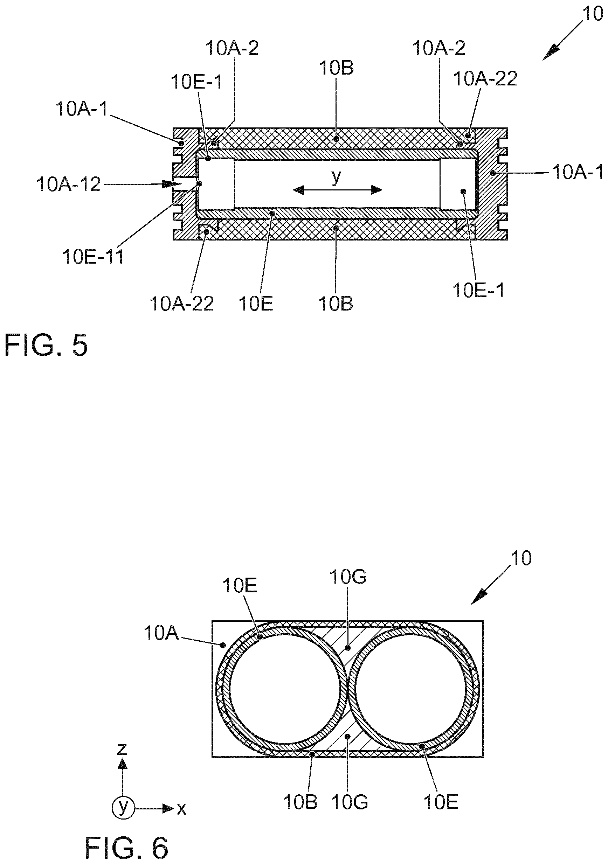

In den nachfolgenden Figuren 5 bis 8 werden die gleichen Bezugszeichen für gleiche Bauteile verwendet, wobei in der zugehörigen Beschreibung nicht erneut alle bereits vorgestellten Bauteile anhand der Bezugszeichen nochmals erläutert werden.

In Figur 5 ist in einem Schnitt in Längsrichtung (y-Richtung) ein Querträger 10 in einer zweiten Ausführungsform dargestellt, der unter Verzicht des erhöhten Volumens des Liners 10E in Längsrichtung y gesehen eine zylindrische Mantelfläche und einen kreisförmigen Querschnitt aufweist. Dadurch wird der Aufbau des Querträgers 10 einfacher. Durch den in Längsrichtung y des Liners 10E gleichbleibenden Durchmesser des Liners 10E sind die Innenkonturen der Flanschaufnahmen 10A-2 nicht mehr schalenartig, sondern die Innenkontur der in Figur 5 gezeigten Flanschaufnahme 10A-2 verläuft in y-Richtung gesehen gerade, wodurch eine einfachere Herstellung des Flanschendes 10A möglich ist.

Außerdem kann in vorteilhafter Weise auf die Keilringe 10F verzichtet werden, da der Übergang zwischen dem Flanschrand 10-21 der Flanschaufnahme 10A-2 und der Außenkontur des Liners 10E nicht mehr keilförmig ist, wenn der Durchmesser des Liners 10E gleich bleibt. Der in Figur 5 dargestellte Querträger 10 weist beispielsweise nur eine Flanschöffnung 10A-12 in einem der Flanschenden 10A auf, so dass der Liner 10E nur über einen Hals 10E-1 zugänglich ist.

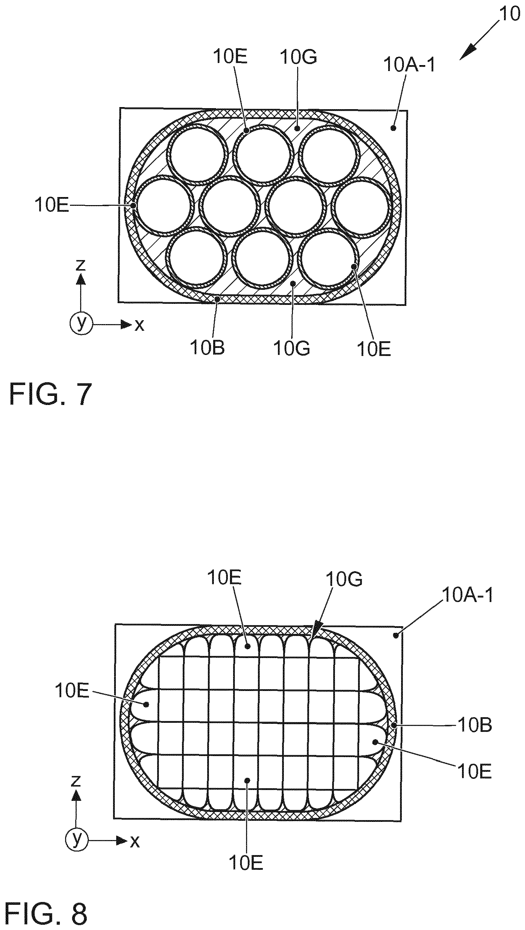

In den Figuren 6 und 7 sind Schnittdarstellungen des Querträgers 10 im Bereich der Flanschenden 10A quer zur Längsrichtung (y-Richtung) dargestellt, die beispielsweise unter Verzicht des erhöhten Volumens des Liners 10E in Längsrichtung y gesehen einen kreisförmigen zylindrischen Liner 10E aufweisen.

Die Längsrichtung y verläuft in den Figur 6 und 7 in die Blattebene hinein. Verdeutlicht wird anhand der Figuren 6 und 7, dass eine Anordnung von mehreren Linern 10E möglich ist.

In Figur 6 ist in einer dritten Ausführungsform ein Querträger 10 mit zwei Linern 10E und in Figur 7 in einer vierten Ausführungsform ein Querträger 10 mit mehreren Linern 10E, insbesondere zehn Linern 10E, ausgebildet. Dadurch entstehen jeweils je nach der Formgebung der Liner 10E in Längsrichtung y gesehen Zwischenräume, die durch Füllmaterial 10G gefüllt werden.

Schließlich ist in Figur 8 schematisch in einer perspektivischen Darstellung gezeigt, dass gemäß einer fünften Ausführungsform in einem Querträger 10 mehrere Liner 10E gegebenenfalls mit mehreren einseitigen oder beidseitigen flanschendseitigen Anschlüssen mit unterschiedlichen geometrischen Formen anordbar sind, wodurch eine Optimierung des zur Verfügung stehenden Bauraumes möglich ist, so dass beispielsweise die Anordnung von Füllmaterial 10G nur in geringem Maße oder nicht notwendig ist. Es versteht sich, dass auch nur ein Liner 10E mit nur einem flanschendseitigen Anschluss oder zwei sich gegenüberliegenden flanschendseitigen Anschlüssen ausbildbar ist, der mehrere Behälter aufweist, die gemäß der Darstellung in Figur 8 unterschiedliche geometrische Formen zur Bauraumoptimierung des Drucktanks aufweisen.

### Bezugszeichenliste

- N: Nutzfahrzeug
- Y1, Y2, Y3: Radachsen
- 100: Fahrgestellrahmen
- 1: Querträger (Stand der Technik)
- 1': Querträger (Stand der Technik)
- 1A: Flanschenden (Stand der Technik)
- 1B: Hohlprofil
- 2: Längsträger
- 3: Achsaufhängung
- 10: Strukturbauteil, Querträger (Erfindung)
- 10A: Flanschenden
- 10A-1: Flanschplatte
- 10A-11: Flanschnut
- 10A-12: Flanschöffnung
- 10A-2: Flanschaufnahme
- 10A-21: Flanschrand
- 10A-22: Vertiefung
- 10B: Verbindungselement
- 10C: Gleitbuchse
- 10D: Dichtring
- 10E: Speicherbehälter (Liner)
- 10E-1: Hals
- 10E-11: Lineröffnung
- 10E-2: Kappe
- 10F: Keilring
- 10G: Füllmaterial
- 20: Wickelkamm
- I: Einzelheit gemäß Figur 1A
- II: Einzelheit gemäß Figur 3
- x: Längsrichtung eines Fahrzeugs
- y: Richtung in der Horizontalen quer zur Längsrichtung x
- z: Richtung in der Vertikalen quer zur Längsrichtung x-Richtung

## Patentansprüche

1. Strukturbauteil (10) für einen Fahrgestellrahmen (100) eines Fahrzeuges (N), welches zur Befestigung des Strukturbauteiles (10) an dem Fahrgestellrahmen (100) mindestens ein Flanschende (10A) umfasst, das mit einem Speicherbehälter (10E) in Verbindung steht, wobei das mindestens eine Flanschende (10A) eine Flanschaufnahme (10A-2) aufweist, die den Speicherbehälter (10E) endseitig lose aufnimmt, **dadurch gekennzeichnet, dass** eine indirekte feste Verbindung zwischen Speicherbehälter (10E) und Flanschaufnahme (10A-2) durch ein als Faserverbundlaminat ausgeführtes Verbindungselement (10B) bewirkt ist, welches zumindest teilweise eine Mantelfläche der Flanschaufnahme (10A-2) und zumindest teilweise eine Mantelfläche des Speicherbehälters (10E) einstückig umgibt.

2. Strukturbauteil (10) nach Anspruch 1, **dadurch gekennzeichnet, dass** das Flanschende (10A) aus einem Leichtbaumaterial gefertigt ist.

3. Strukturbauteil (10) nach Anspruch 1, **dadurch gekennzeichnet, dass** die Flanschaufnahme (10A-2) des Flanschendes (10A) schalenartig ausgebildet ist, wobei eine Außenkontur einer Kappe (10E-2) des Speicherbehälters (10E) mit einer Innenkontur der schalenartigen Flanschaufnahme (10-2) korrespondiert.

4. Strukturbauteil (10) nach Anspruch 1, **dadurch gekennzeichnet, dass** das Flanschende (10A) auf seiner zu dem Speicherbehälter (10E) gerichteten Innenseite eine kreisförmig umlaufende Flanschnut (10A-11) aufweist, wobei in der Flanschnut (10A-11) eine Gleitbuchse (10C) und eine Dichtung (10D) angeordnet sind.

5. Strukturbauteil (10) nach Anspruch 3 und 4, **dadurch gekennzeichnet, dass**
• ein Hals (10E-1) des Speicherbehälters (10E) einerseits über die Gleitbuchse (10C) formschlüssig in die Flanschnut (10A-11) des Flanschendes (10A) eingesteckt ist, wobei die Dichtung (10D) für eine Abdichtung gegenüber dem Flanschende (10A) sorgt,
• und die Kappe (10E-2) des Speicherbehälters (10E) andererseits formschlüssig in die schalenartige Flanschaufnahme (10A-2) des Flanschendes (10A) gesteckt ist, wobei eine Flanschaufnahme (10A-2) an ihrem dem Flanschende (10A) gegenüberliegenden Ende einen Flanschrand (10A-21) bildet.

6. Strukturbauteil (10) nach Anspruch 1, **dadurch gekennzeichnet, dass** der als Speicherbehälter (10E) ausgebildete Liner aus einem thermoplastischen Kunststoffmaterial, insbesondere aus Polyethylen oder Polyamid oder Polyoxymethylen, gefertigt ist.

7. Strukturbauteil (10) nach Anspruch 1, **dadurch gekennzeichnet, dass** der Speicherbehälter (10E) mindestens einseitig eine Speicherbehälteröffnung (10E-11) und das Flanschende (10A) mindestens eine mit der Speicherbehälteröffnung (10E-11) in Verbindung stehende Flanschöffnung (10A-12) aufweist.

8. Strukturbauteil (10) nach Anspruch 1, **dadurch gekennzeichnet, dass** das Strukturbauteil (10) ein in dem Fahrgestellrahmen (100) anordbarer Querträger ist, der zwei Flanschenden (10A) mit jeweils einer Flanschaufnahme (10A-2) aufweist, die den Speicherbehälter (10E) beidseitig lose aufnehmen, wobei die indirekte feste Verbindung zwischen Speicherbehälter (10E) und den Flanschaufnahmen (10A-2) durch ein als Faserverbundlaminat ausgeführtes Verbindungselement (10B) bewirkt ist, welches zumindest teilweise die Mantelflächen der Flanschaufnahmen (10A-2) und zumindest teilweise die Mantelfläche des Speicherbehälters (10E) einstückig umgibt, wobei im Einbauzustand, bei dem der Querträger (10) zwischen zwei Strukturbauteilen (2) des Fahrgestellrahmens (100) angeordnet ist, auf die Flanschenden (10A) wirkende Kräfte über das Verbindungselement (10B) übertragbar sind.

9. Verfahren zur Herstellung eine Strukturbauteiles (10), welches folgende Schritte umfasst,
a) Fertigen mindestens eines Flanschendes (10A) mit einer Flanschaufnahme (10A-2) und
b) Fertigen eines Speicherbehälters (10E) und
c) Einstecken des Speicherbehälters (10E) in die Flanschaufnahme (10A-2), so dass die Flanschaufnahme (10A-2) den Speicherbehälter (10E) endseitig lose aufnimmt,
**dadurch gekennzeichnet, dass**
d) eine Mantelfläche der Flanschaufnahme (10A-2) zumindest teilweise und eine Mantelfläche des Speicherbehälters (10E) zumindest teilweise mit einem Verbindungselement (10B) aus einem Faserverbundlaminat umgeben wird,
wodurch die Flanschaufnahme (10A-2) und der Speicherbehälter (10E) über das Verbindungselement (10B) indirekt fest verbunden sind.

## Claims

1. A structural component (10) for a chassis frame (100) of a vehicle (N), which for fastening the structural component (10) to the chassis frame (100) comprises at least one flange end (10A), which is connected to a storage container (10E), wherein the at least one flange end (10A) has a flange receptacle (10A-2), which accommodates the storage container (10E) loosely on the end side, **characterized in that** an indirect fixed connection is effected between storage container (10E) and flange receptacle (10A-2) by a connecting element (10B) designed as a composite fiber laminate, which at least partially surrounds a lateral surface of the flange receptacle (10A-2) and at least partially integrally surrounds a lateral surface of the storage container (10E).

2. The structural component (10) according to Claim 1, **characterized in that** the flange end (10A) is made from a lightweight material.

3. The structural component (10) according to Claim 1, **characterized in that** the flange receptacle (10A-2) of the flange end (10A) is designed shell-like, wherein an outer contour of a cap (10E-2) of the storage container (10E) corresponds to an inner contour of the shell-like flange receptacle (10-2).

4. The structural component (10) according to Claim 1, **characterized in that** the flange end (10A) has a circular circumferential flange groove (10A-11) on its inner side directed towards the storage container (10E), wherein a slide bush (10C) and a seal (10D) are arranged in the flange groove (10A-11).

5. The structural component (10) according to Claim 3 and 4, **characterized in that**
• a neck (10E-1) of the storage container (10E), on the one hand, is inserted via the slide bush (10C) positively into the flange groove (10A-11), wherein the seal (10D) provides a seal against the flange end (10A),
• and the cap (10E-2) of the storage container (10E), on the other hand, is positively inserted into the shell-like flange receptacle (10A-2) of the flange end (10A), wherein a flange receptacle (10A-2) forms a flange edge (10A-21) on its end opposite the flange end (10A).

6. The structural component (10) according to Claim 1, **characterized in that** the liner designed as storage container (10E) is made from a thermoplastic synthetic material, in particular from polyethylene or polyamide or polyoxymethylene.

7. The structural component (10) according to Claim 1, **characterized in that** the storage container (10E) has a storage container opening (10E-11) at least on one side and the flange end (10A) has a flange opening (10A-12) connected to the storage container opening (10E-11).

8. The structural component (10) according to Claim 1, **characterized in that** the structural component (10) is a cross-member which can be arranged in the chassis frame (100), which cross-member has two flange ends (10A) with in each case one flange receptacle (10A-2), which loosely accommodate the storage container (10E) on both sides, wherein the indirectly fixed connection between storage container (10E) and the flange receptacle (10A-2) is effected by a connecting element (10B) designed as a composite fiber laminate, which at least partially surrounds the lateral surfaces of the flange receptacles (10A-2) and at least partially integrally surrounds the lateral surface of the storage container (10E), wherein in the installed state, in which the cross-member (10) is arranged between two structural components (2) of the chassis frame (100), forces acing on the flange ends (10A) can be transmitted via the connecting element (10B).

9. A method for producing a structural component (10), which comprises the following steps,
a) production of at least one flange end (10A) with a flange receptacle (10A-2) and
b) production of a storage container (10E) and
c) insertion of the storage container (10E) into the flange receptacle (10A-2), so that the flange receptacle (10A-2) loosely accommodates the storage container (10E) on the end side,
**characterized in that**
d) a lateral surface of the flange receptacle (10A-2) is surrounded at least partially and a lateral surface of the storage container (10E) is surrounded at least partially with a connecting element (10B) made from a composite fiber laminate,
whereby the flange receptacle (10A-2) and the storage container (10E) are indirectly fixedly connected via the connecting element (10B).

## Revendications

1. Composant structurel (10) pour un cadre de châssis (100) d'un véhicule (N), qui comprend, pour la fixation du composant structurel (10) sur le cadre de châssis (100), au moins une extrémité de bride (10A), qui est en liaison avec un réservoir (10E), l'au moins une extrémité de bride (10A) comprenant un logement de bride (10A-2) qui loge de manière lâche le réservoir (10E) au niveau de l'extrémité, **caractérisé en ce qu'**une liaison fixe indirecte entre le réservoir (10E) et le logement de bride (10A-2) est assurée par un élément de liaison (10B) conçu comme un stratifié de composite à fibres, qui entoure au moins partiellement une surface d'enveloppe du logement de bride (10A-2) et au moins partiellement une surface d'enveloppe du réservoir (10E).

2. Composant structurel (10) selon la revendication 1, **caractérisé en ce que** l'extrémité de bride (10A) est constituée d'un matériau de construction léger.

3. Composant structurel (10) selon la revendication 1, **caractérisé en ce que** le logement de bride (10A-2) de l'extrémité de bride (10A) est conçu sous la forme d'une coque, un contour externe d'un capuchon (10E-2) du réservoir (10E) correspondant à un contour interne du logement de bride (10-2) en forme de coque.

4. Composant structurel (10) selon la revendication 1, **caractérisé en ce que** l'extrémité de bride (10A) comprend, sur son côté interne orienté vers le réservoir (10E), une rainure de bride (10A-11) périphérique circulaire, moyennant quoi, dans la rainure de bride (10A-11), sont disposés un manchon coulissant (10C) et un joint d'étanchéité (10D).

5. Composant structurel (10) selon la revendication 3 et 4, **caractérisé en ce que**
• un col (10E-1) du réservoir (10E) est emboîté d'une part, par complémentarité de forme, par l'intermédiaire du manchon coulissant (10C), dans la rainure de bride (10A-11) de l'extrémité de bride (10A), le joint d'étanchéité (10D) assurant une étanchéification par rapport à l'extrémité de bride (10A),
• et le capuchon (10E-2) du réservoir (10E) est emboîté d'autre part par complémentarité de forme dans le logement de bride (10A-2) en forme de coque de l'extrémité de bride (10A), un logement de bride (10A-2) formant, au niveau de son extrémité opposée à l'extrémité de bride (10A), un bord de bride (10A-21).

6. Composant structurel (10) selon la revendication 1, **caractérisé en ce que** le liner conçu comme un réservoir (10E) est constitué d'une matière plastique thermoplastique, plus particulièrement de polyéthylène ou de polyamide ou de polyoxyméthylène.

7. Composant structurel (10) selon la revendication 1, **caractérisé en ce que** le réservoir (10E) comprend au moins, sur un côté, une ouverture de réservoir (10E-11) et l'extrémité de bride (10A) comprend au moins une ouverture de bride (10A-12) reliée avec l'ouverture de réservoir (10E-11).

8. Composant structurel (10) selon la revendication 1, **caractérisé en ce que** le composant structurel (10) est une traverse pouvant être disposée dans le cadre de châssis (100), qui comprend deux extrémités de brides (10A), chacune avec un logement de bride (10A-2), qui logent de manière lâche le réservoir (10E) des deux côtés, la liaison fixe indirecte entre le réservoir (10E) et les logements de brides (10A-2) étant assurée par un élément de liaison (10B) conçu comme un stratifié en composite à fibres, qui entoure au moins partiellement les surfaces d'enveloppe des logements de brides (10A-2) et au moins partiellement la surface d'enveloppe du réservoir (10E), moyennant quoi, dans l'état monté, dans lequel la traverse (10) est disposée entre deux composants structurels (2) du cadre de châssis (100), les forces qui s'exercent sur les extrémités de brides (10A) peuvent être transmises par l'intermédiaire de l'élément de liaison (10B).

9. Procédé de fabrication d'un composant structurel (10) qui comprend les étapes suivantes :
a) fabrication d'au moins une extrémité de bride (10A) avec un logement de bride (10A-2) et
b) fabrication d'un réservoir (10E) et
c) emboîtement du réservoir (10E) dans le logement de bride (10A-2), de façon à ce que le logement de bride (10A-2) loge de manière lâche le réservoir (10E) du côté de l'extrémité,
**caractérisé en ce que**
d) une surface d'enveloppe du logement de bride (10A-2) est entourée au moins partiellement et une surface d'enveloppe du réservoir (10E) est entourée au moins partiellement avec un élément de liaison (10B) constitué d'un stratifié en composite à fibres,
le logement de bride (10A-2) et le réservoir (10E) étant ainsi reliés fermement de manière indirecte par l'intermédiaire de l'élément de liaison (10B).
